# FASCICULE DE BREVET EUROPEEN

(11) **EP 2 831 136 B1**
(45) Date de publication et mention de la délivrance du brevet: **27.04.2016**
(21) Numéro de dépôt: 13719951.9
(22) Date de dépôt: 29.03.2013
(51) Int. Cl.: C08G 63/85, C08G 63/16, C08G 63/181, C08G 63/42, C08G 63/58, C08G 63/672, C08J 5/18, C08L 67/02

(54) **POLYMÈRES, LEUR PROCÉDÉ DE SYNTHÈSE ET COMPOSITIONS LES COMPRENANT**
POLYMERE, VERFAHREN ZUR SYNTHESE DAVON UND ZUSAMMENSETZUNGEN DAMIT
POLYMERS, THE PROCESS FOR THE SYNTHESIS THEREOF AND COMPOSITIONS COMPRISING SAME

(30) Priorité: 30.03.2012 FR 1252914
(43) Date de publication de la demande: 04.02.2015
(73) Titulaire: Roquette Frères, 62136 Lestrem (FR)
(72) Inventeur: JACQUEL, Nicolas, F-59130 Lambersart (FR); SAINT-LOUP, René, F-59160 Lomme (FR); FENOUILLOT-RIMLINGER, Françoise, F-38080 L'isle D'abeau (FR); PASCAULT, Jean-Pierre, F-69100 Villeurbanne (FR); ROUSSEAU, Alain, F-69800 Saint Priest (FR)
(74) Mandataire: Tezier Herman, Béatrice
(86) Numéro de dépôt international: PCT/FR2013/050700
(87) Numéro de publication internationale: WO 2013/144525

(56) Documents cités:
- WO-A1-2007/052847
- WO-A1-2009/135921
- WO-A1-2011/147806
- CN-A- 102 372 845
- US-A- 2 551 731
- MÓNICA GOMES ET AL: "Synthesis and characterization of poly(2,5-furan dicarboxylate)s based on a variety of diols", JOURNAL OF POLYMER SCIENCE PART A: POLYMER CHEMISTRY, vol. 49, no. 17, 1 septembre 2011 (2011-09-01), pages 3759-3768, XP055044749, ISSN: 0887-624X, DOI: 10.1002/pola.24812

## Description

### Domaine de l'invention

La présente invention se rapporte à des copolymères, notamment de poly(butylène succinate-co-furanoate) (PBSF), lesquels ont des propriétés mécaniques intéressantes. Elle se rapporte également à un procédé de préparation de ces polymères, ainsi qu'à des compositions les comprenant.

### Arrière-plan technologique de l'invention

L'une des préoccupations importantes aujourd'hui dans le domaine des polymères est de fournir des polymères d'origine naturelle (bio-sourcés) et/ou biodégradables. A ces fins, il est intéressant de pouvoir utiliser dans la synthèse des polymères, des monomères bio-sourcés.
Les polyesters se répartissent principalement en deux classes aux propriétés différentes : les polyesters aliphatiques, comme le poly(butylène succinate) (PBS), le poly(butylène succinate-co-adipate) (PBSA) ou la poly-ε-caprolactone (PCL), et les polyesters aromatiques, comme le poly(éthylène téréphtalate) (PET), le poly(triméthylène téréphtalate) (PTT) ou le poly(butylène téréphtalate) (PBT).
Les polyesters aliphatiques ont généralement des températures de fusion proches de celles des polyoléfines, ce qui permet entre autres leur application dans les domaines des films et de l'emballage, dont la biodégradabilité est un avantage évident pour les applications mono-usages. Ils présentent en revanche une sensibilité importante à l'hydrolyse. Certains des monomères utilisés pour synthétiser les polyesters aliphatiques peuvent être bio-sourcés, par exemple l'acide succinique et le 1,4-butanediol utilisés pour la synthèse du PBS. Les polyesters aromatiques ont quant à eux des propriétés mécaniques difficilement compatibles avec les applications cibles des polyoléfines. De plus, l'importante proportion de monomères aromatiques dans la composition de ces polyesters réduit fortement l'hydrophilie de ces résines et annihile leur caractère biodégradable.
Pour cumuler des propriétés mécaniques proches de celles des polyoléfines et augmenter la capacité de résistance à l'hydrolyse des polyesters aliphatiques, des polyesters aliphatiques-aromatiques ont été développés. Ceci permet de surmonter certains des inconvénients des polyesters purement aliphatiques ou purement aromatiques.
Dans cette optique, le PBAT (poly(butylène adipate-co-téréphtalate)), commercialisé par BASF sous le nom Ecoflex^{®}, a été développé afin de répondre au besoin croissant en Europe de disposer de polymères biodégradables, notamment de polymères destinés à des emballages biodégradables, permettant de remplacer, au moins dans certaines applications, les polyoléfines. Le PBAT présente également d'excellentes propriétés mécaniques, notamment en termes d'élongation et de contrainte à la rupture.
Néanmoins, la quantité produite de PBAT ne permet pas à l'heure actuelle de répondre à la totalité des besoins du marché, besoins amplifiés par la législation de certains pays européens qui imposent de plus en plus l'utilisation de polymères biodégradables dans les emballages mono-usages. En outre, le PBAT est pétro-sourcé à l'heure actuelle, ce qui impacte fortement son empreinte carbone et réduit donc le bénéfice environnemental de son usage dans l'emballage mono-usage. De plus, pour atteindre les propriétés mécaniques améliorées et en particulier les propriétés d'allongement, il est nécessaire d'ajouter des quantités relativement importantes de motifs acide téréphtalique.

La demande WO 2009/135921 A1 décrit des polyesters biodégradables aliphatique-aromatique, dont le motif aromatique peut être un motif furanoate. Les polyesters décrits comprennent une quantité de motifs furanoates, par rapport à la somme des moles de motifs issus des diacides, bien supérieure à 35% mol. Il n'est pas décrit que ce polyester est apte à être transformé par gonflage. Or, la Demanderesse a pu constater que les polyesters décrits dans ce document, et notamment celui de l'exemple 1, ne sont pas transformables par gonflage car leur vitesse de cristallisation est insuffisante (voir exemple 4.2 du présent document). Or, il existe un besoin d'obtenir de tels polymères, la mise en forme de polymères par gonflage, notamment pour la mise en forme de films polymères de grande dimension, étant une nécessité industrielle.

Dans ce cadre, la Demanderesse a démontré qu'il est possible de créer d'autres polyesters aliphatiques-aromatiques présentant des propriétés proches, voire supérieures, à celles du PBAT et aptes à être mis en forme par gonflage. Il s'agit en particulier de polyesters de poly(butylène succinate-co-furanoate) (PBSF) qui comportent des motifs issus de butanediol, d'acide succinique et d'acide 2,5-furanedicarboxylique (FDCA), qui peuvent être d'origine bio-sourcée.
Les propriétés mécaniques de ces polymères leur permettent d'être utilisés de manière avantageuse pour la fabrication de films et/ou d'emballages.
Par ailleurs, la Demanderesse a réalisé un procédé de synthèse de ces polymères qui présente, de manière surprenante, des avantages indéniables par rapport aux procédés décrits pour la synthèse d'autres polyesters aliphatiques-aromatiques.

### Résumé de l'invention

L'invention porte sur un polymère comprenant des motifs issus de monomères comprenant un acide 2,5-furanedicarboxylique, au moins un diacide aliphatique et au moins un diol aliphatique, dans lequel ledit polymère comprend :
- une fraction molaire de motifs issus d'acide 2,5-furanedicarboxylique, rapportée à la somme des moles de motifs issus de diacides aliphatiques et d'acide 2,5-furanedicarboxylique, allant de 2,5 à 35%, par exemple de 5 à 30%, avantageusement de 6 à 25%, préférentiellement de 7 à 20% ;
- la fraction molaire de la somme des motifs issus d'acide 2,5-furanedicarboxylique et de diacides aliphatiques, rapportée à la somme totale des motifs, étant comprise entre 40 et 60%;
- la fraction molaire de la somme des motifs issus de diols aliphatiques, rapportée à la somme totale des motifs, étant comprise entre 40 et 60%.

Dans ces gammes de fractions molaires, et particulièrement dans les gammes préférées, les propriétés des polymères, notamment leurs propriétés mécaniques, sont améliorées par rapport aux polymères aliphatiques ne comprenant pas de motifs issus d'acide 2,5-furanedicarboxylique. En particulier, les polymères présentent un module et un allongement à la rupture améliorés, qui leur permettent d'être utilisés dans des applications plus variées que les polyesters aliphatiques classiques. Ces polymères peuvent également présenter une bonne biodégradabilité et/ou une bonne tenue à l'hydrolyse. De plus, le choix particulier des quantités et des monomères constitutifs permet d'obtenir des polymères aisément aptes à être mis en forme par gonflage.

Les diols et diacides aliphatiques peuvent être linéaires, ramifiés ou cycliques. Ils peuvent être également saturés ou insaturés.

Avantageusement, les diacides aliphatiques sont des diacides saturés linéaires. Ils peuvent être choisis parmi l'acide succinique et l'acide adipique, préférentiellement l'acide succinique. Avantageusement, les diols aliphatiques sont des diols saturés linéaires. Ils peuvent être choisis parmi l'éthylène glycol et le 1,4-butanediol, préférentiellement le 1,4-butanediol.

Avantageusement, la somme des motifs issus d'acide 2,5-furanedicarboxylique, de diacides aliphatiques et de diols aliphatiques est supérieure à 90% en moles de la totalité des motifs du polymère, préférentiellement supérieure à 95%, tout préférentiellement est égale à 100%.

L'invention concerne également un procédé de préparation d'un polymère, comprenant :
- une étape d'estérification entre des monomères comprenant au moins un diacide aliphatique, par exemple de l'acide succinique, de l'acide 2,5-furanedicarboxylique, et au moins un diol aliphatique, par exemple du 1,4-butanediol, pour former des oligomères, et
- une étape de couplage par trans-estérification des oligomères formés à la première étape, pour former un polymère.
Ce procédé présente l'avantage de former le polymère de manière plus rapide qu'un même procédé dans lequel on fait réagir le diacide aliphatique et le diol aliphatique sans acide 2,5-furanedicarboxylique.
La présente invention concerne également les polymères, de préférence les polymères de poly(butylène succinate-co-furanoate) PBSF, obtenus selon ce procédé. Un autre objet porte également sur des compositions polymériques comprenant au moins un polymère selon l'invention. L'invention porte aussi sur des films de ces polymères ou de ces compositions.

### Description détaillée de l'invention

L'invention porte sur un polymère comprenant des motifs issus de monomères comprenant un acide 2,5-furanedicarboxylique, au moins un diacide aliphatique comprenant de 4 à 10 atomes de carbone et au moins un diol aliphatique comprenant de 2 à 8 atomes de carbone, dans lequel ledit polymère comprend :
- une fraction molaire de motifs issus d'acide 2,5-furanedicarboxylique, rapportée à la somme des moles de motifs issus de diacides aliphatiques et d'acide 2,5-furanedicarboxylique, allant de 2,5 à 35%, par exemple de 5 à 30%, avantageusement de 6 à 25%, préférentiellement de 7 à 20% ;
- la fraction molaire de la somme des motifs issus d'acide 2,5-furanedicarboxylique et de diacides aliphatiques, rapportée à la somme totale des motifs, étant comprise entre 40 et 60%;
- la fraction molaire de la somme des motifs issus de diols aliphatiques, rapportée à la somme totale des motifs, étant comprise entre 40 et 60%.

Dans ces gammes de fractions molaires, et particulièrement dans les gammes préférées, les propriétés des polymères, notamment leurs propriétés mécaniques, sont améliorées par rapport aux polymères ne comprenant pas de motifs issus d'acide 2,5-furanedicarboxylique.

Par « motif issu d'acide 2,5-furanedicarboxylique », on désigne dans la présente invention un motif de formule 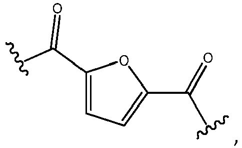 les zigzags désignant les liaisons par l'intermédiaire desquelles le motif est relié au reste du polymère, que ce motif soit effectivement issu d'acide 2,5-furanedicarboxylique, ou qu'il soit issu d'un autre réactif tel qu'un ester de cet acide.

Par « motif issu de diacide aliphatique », on désigne dans la présente invention un motif de formule 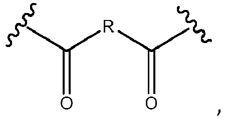 le groupement aliphatique R étant un groupement aliphatique saturé ou insaturé qui peut être linéaire, ramifié ou cyclique, les zigzags désignant les liaisons par l'intermédiaire desquelles le motif est relié au reste du polymère, que ce motif soit effectivement issu du diacide aliphatique de formule COOH-R-COOH, ou qu'il soit issu d'un autre réactif tel qu'un ester de cet acide.

Avantageusement, R comprend de 2 à 8 atomes de carbone, de préférence 2, 3 ou 4 atomes de carbone, en particulier R comprend 2 atomes de carbone.

Avantageusement, le diacide aliphatique comprend de 4 à 10 atomes de carbone, de préférence 4, 5 ou 6 atomes de carbone, en particulier R comprend 2 atomes de carbone.

Par « motif issu de diol aliphatique », on désigne dans la présente invention un motif de formule 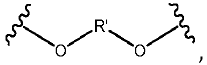 le groupement aliphatique R' étant un groupement aliphatique saturé ou insaturé qui peut être linéaire, ramifié ou cyclique , les zigzags désignant les liaisons par l'intermédiaire desquelles le motif est relié au reste du polymère, que ce motif soit effectivement issu du diol aliphatique de formule OH-R'-OH, ou qu'il soit issu d'un autre réactif.
Avantageusement, R' comprend de 2 à 8 atomes de carbone, de préférence 2, 3 ou 4 ou 6 atomes de carbone, en particulier R' comprend 4 atomes de carbone. Le diol aliphatique comprend le même nombre d'atomes de carbone que R'.

Par « groupement aliphatique », on désigne dans la présente invention un groupement hydrocarboné acyclique ou cyclique, linéaire ou ramifié, saturé ou insaturé, à l'exclusion des composés aromatiques.

Par « polyester aliphatique-aromatique », on désigne dans la présente invention des polyesters comprenant des motifs aliphatiques et des motifs aromatiques, notamment des motifs issus d'acide 2,5-furanedicarboxylique, les motifs aromatiques étant dans des quantités inférieures à 50% en moles par rapport à la totalité des motifs du polymère.
De préférence, le diacide aliphatique est un diacide aliphatique saturé.
A titre d'exemple de diacide aliphatique cyclique saturé, on peut citer l'acide 1,4 cyclohexanedioïque.
Avantageusement, les diacides aliphatiques sont des diacides aliphatiques saturés linéaires. Ils peuvent être choisis parmi l'acide succinique, l'acide glutarique, l'acide adipique, l'acide pimélique, l'acide subérique, l'acide azélaïque et l'acide sébacique. De préférence, le diacide aliphatique est choisi parmi l'acide succinique et l'acide adipique, tout préférentiellement l'acide succinique.

De préférence, le diol aliphatique est un diol saturé.
A titre d'exemple de diol aliphatique cyclique saturé, on peut citer le 1,4-cyclohexanediméthanol (CHDM). Avantageusement, les diols aliphatiques sont des diols saturés linéaires. Ils peuvent être choisis parmi l'éthylène glycol, le 1,3-propanediol et le 1,4-butanediol, le 1,5 pentanediol et le 1,6-hexanediol, préférentiellement le 1,4-butanediol.

Avantageusement, la somme des motifs issus d'acide 2,5-furanedicarboxylique, de diacides aliphatiques et de diols aliphatiques est supérieure à 90% en moles de la totalité des motifs du polymère, préférentiellement supérieure à 95%, tout préférentiellement est égale à 100%.

Avantageusement, les polymères selon l'invention sont obtenus à partir de diols aliphatiques et/ou de diacides aliphatiques biosourcés.

### Synthèse des polymères selon l'invention

Ces polymères peuvent être fabriqués par les méthodes classiques de polycondensation. Préférentiellement, les polymères selon l'invention sont synthétisés par un procédé comprenant au moins 2 étapes (étapes 1 et 2) décrites ci-après.

L'invention concerne également le procédé comprenant les étapes 1 et 2 de synthèse des polymères selon l'invention.

Les étapes 1 et 2 du procédé selon l'invention sont décrites ci-dessous avec des monomères d'acide succinique, d'acide 2,5-furanedicarboxylique et de 1,4-butanediol, mais la présente invention couvre également le procédé mis en oeuvre en remplaçant l'acide succinique par n'importe quel diacide aliphatique tel que décrit dans la présente invention, et/ou le 1,4-butanediol par n'importe quel diol aliphatique tel que décrit dans la présente invention.

Par « diacide aliphatique », on désigne dans la présente invention un composé de formule COOH-R-COOH, le groupement R étant tel que défini ci-avant.
Par « diol aliphatique», on désigne dans la présente invention un composé de formule OH-R'-OH, le groupement R' étant tel que défini ci-avant.

En outre, un procédé mis en oeuvre en remplaçant le diacide aliphatique par un ou plusieurs monoesters ou diesters de ce diacide aliphatique, ou par un mélange d'esters du diacide aliphatique avec le diacide, est également couvert par la présente invention. En particulier, les esters de diacides utilisables dans le procédé selon l'invention peuvent être le diester éthylique ou méthylique du diacide aliphatique, de préférence de l'acide succinique.
De préférence, le diacide aliphatique n'est pas remplacé par un ester dans le procédé de l'invention.

De même, un procédé mis en oeuvre en remplaçant l'acide 2,5-furanedicarboxylique par un ou plusieurs monoesters ou diesters de cet acide, ou par un mélange d'esters de l'acide 2,5-furanedicarboxylique avec l'acide, est également couvert par la présente invention. En particulier, les esters utilisables dans le procédé selon l'invention peuvent être le diester éthylique ou méthylique de l'acide 2,5-furanedicarboxylique.
De préférence, l'acide 2,5-furanedicarboxylique n'est pas remplacé par un ester dans le procédé de l'invention.

### Etape 1 :

La première étape du procédé de synthèse des polymères selon l'invention est une estérification entre des monomères d'acide succinique, d'acide 2,5-furanedicarboxylique, et de 1,4-butanediol, pour former des oligomères.
Par exemple, l'étape 1 peut être réalisée selon le schéma suivant : 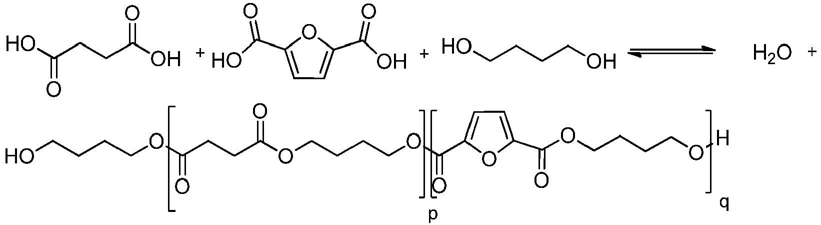 L'étape 1 est réalisée avec élimination partielle ou totale de l'eau formée lors de la réaction d'estérification entre une molécule d'acide succinique ou 2,5-furanedicarboxylique, et une molécule de 1,4-butanediol.
L'étape 1 peut être réalisée en présence d'un système catalytique constitué d'un ou plusieurs catalyseurs d'estérification. De préférence, le système catalytique est inerte vis-à-vis de l'eau. Le système catalytique peut notamment être employé pour permettre d'accélérer la cinétique de réaction. Ce système catalytique peut être introduit au début de l'étape 1. Ce système catalytique peut comprendre, de préférence être, l'acide para-toluène sulfonique (APTS) et/ou l'acide méthane sulfonique (AMS).

L'étape 1 est réalisée en présence d'un nombre d'équivalents de 1,4-butanediol, par rapport à la totalité des acides succinique et/ou 2,5-furanedicarboxylique, susceptible de varier dans une large mesure, notamment entre 0,5 et 10 équivalents, avantageusement entre 0,8 et 2 équivalents, et préférentiellement entre 0,9 et 1,2 équivalents de 1,4-butanediol par rapport à la totalité des acides succinique et/ou 2,5-furanedicarboxylique. De préférence, la première étape est réalisée en présence d'un excès de 1,4-butanediol par rapport à la totalité des acides succinique et/ou 2,5-furanedicarboxylique, par exemple entre 1,02 et 1,2 équivalents.

L'étape 1 est réalisée avec une fraction molaire d'acide 2,5-furanedicarboxylique, rapportée à la somme des moles d'acide succinique et d'acide 2,5-furanedicarboxylique, qui est susceptible de varier dans une large mesure, notamment entre 2,5 et 80%, tout particulièrement entre 2,5 et 50%. Dans un mode de réalisation de l'invention, la fraction molaire d'acide 2,5-furanedicarboxylique est inférieure ou égale à 25%, de préférence supérieure ou égale à 5%, de préférence strictement supérieure à 5%, voire supérieure ou égale à 10%. Préférentiellement, la fraction molaire d'acide 2,5-furanedicarboxylique est inférieure ou égale à 22%, voire 20%.
Selon les conditions opératoires du procédé de synthèse, les quantités de motifs polymérisés et donc présents dans le polymère obtenu par le procédé peuvent varier. Ainsi, les quantités molaires introduites de monomères dans le réacteur divergent généralement des quantités présentes dans le polymère final synthétisé. A titre illustratif de ce phénomène, on peut se référer aux exemples de la présente Demande.
L'Homme du métier saura aisément modifier les conditions opératoires, en particulier les quantités de monomères introduits dans le réacteur, afin d'obtenir des polymères présentant les quantités molaires en chaque motif désiré.
La proportion de chacun des motifs présents dans le polymère peut être déterminée classiquement par RMN (Résonance magnétique Nucléaire) ¹H à partir du calcul du rapport des intégrales des différents pics. L'analyse RMN ¹H des copolymères contenant de l'acide 2,5-furanedicarboxylique peut être réalisée sur un spectromètre RMN équipé d'une sonde ¹H. La fréquence de résonance du spectromètre peut varier de 100 à 1000 Mhz. Pour être analysés, les échantillons de polymère peuvent être préalablement solubilisés dans un solvant deutéré approprié, par exemple le chloroforme deutéré. L'homme du métier adaptera aisément les conditions d'acquisition pour obtenir le spectre. Par exemple, on peut réaliser un nombre de 512 acquisitions avec un temps de relaxation d'au moins 1 seconde.

Les oligomères formés à l'issue de l'étape 1 ont de préférence des terminaisons OH.
Les nombres de motifs p et q sont directement reliés à la masse molaire moyenne en nombre de l'oligomère. La masse molaire moyenne en nombre de l'oligomère peut varier dans une large mesure, notamment en fonction des caractéristiques désirées pour l'oligomère, et va généralement de 1000 à 5000 g/mol, préférentiellement de 2000 à 4000 g/mol.
L'homme du métier optimise les conditions de réaction pour que les oligomères obtenus à l'issue de l'étape 1 possèdent la masse molaire désirée.
L'étape 1 se fait avantageusement sous atmosphère inerte. L'étape 1 peut se faire à pression atmosphérique ou légèrement sous pression, par exemple entre 1 et 4 bars. La température lors de l'étape 1 est avantageusement comprise entre 190 et 235°C, de préférence entre 200°C et 225°C (bornes incluses).
Durant l'étape 1, on peut également introduire d'autres monomères susceptibles de réagir avec le 1,4-butanediol, l'acide succinique et/ou l'acide 2,5-furanedicarboxylique, tels que des monomères d'alphahydroxyacide. Préférentiellement, ces monomères sont introduits dans le réacteur dans des quantités inférieures à 10% en moles, voire inférieures à 5% en moles par rapport au nombre de moles total des monomères introduits. Dans un mode de réalisation de l'invention, aucun monomère d'alpha-hydroxyacide n'est introduit dans le réacteur au début ou au cours de l'étape 1.
Dans un mode de réalisation de l'invention, les seuls monomères introduits dans le réacteur au début ou au cours de l'étape 1 sont des monomères d'acide succinique, d'acide 2,5-furanedicarboxylique, et de 1,4-butanediol.

### Etape 2 :

La seconde étape du procédé de synthèse des polymères selon l'invention est le couplage par transestérification des oligomères formés à la première étape pour former un polymère. Par exemple, l'étape 2 peut être réalisée selon le schéma suivant :

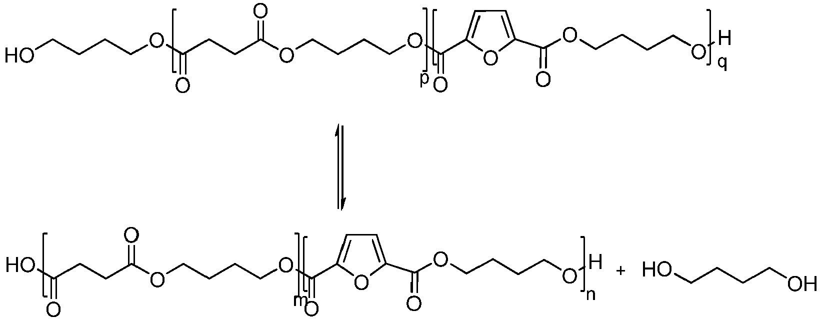

L'étape 2 est réalisée de préférence en présence d'un système catalytique constitué d'un ou plusieurs catalyseurs de transestérification. Le système catalytique peut être employé pour permettre d'accélérer la cinétique de réaction ou d'atteindre des masses molaires plus importantes. Ce système catalytique peut être introduit au début ou au cours de l'étape 1. Le système catalytique peut, alternativement être ajouté au début ou au cours de l'étape 2, en particulier s'il est sensible à l'eau formée dans l'étape 1. De préférence, le système catalytique est introduit au début de l'étape 2. Ce système catalytique peut comprendre, de préférence être, un catalyseur à base de zirconium ou de titane, de préférence à base de zirconium.

La seconde étape est avantageusement réalisée à pression réduite, notamment à une pression inférieure à 5 mbar, de préférence à une pression comprise entre 0,01 et 1 mbar, par exemple entre 0,5 et 1 mbar.
La seconde étape est réalisée avec élimination partielle ou totale du 1,4-butanediol produit lors du couplage de deux oligomères.
La température lors de l'étape 2 est avantageusement comprise entre 200 et 260°C, de préférence entre 210 et 230°C (bornes incluses).

Dans la présente invention, lorsqu'on réalise une « élimination partielle ou totale » d'un constituant issu d'une réaction, on préfère qu'au moins 90% des moles de ce constituant soient éliminées du réacteur, voire au moins 95%, voire au moins 99%. L'élimination peut être réalisée en continu lors de la réaction, par exemple par distillation.

Les nombres de motifs m et n sont directement reliés à la masse molaire moyenne en nombre du polymère. La masse molaire moyenne en nombre du polymère obtenu à l'issue de l'étape 2 peut être supérieure à 20 000 g/mol, avantageusement supérieure à 30 000 g/mol, préférentiellement supérieure à 35 000 g/mol, tout préférentiellement supérieure à 40 000 g/mol. Elle est généralement inférieure à 150 000 g/mol, par exemple inférieure à 100000 g/mol.
Dans ces gammes de masses molaires, et particulièrement dans les gammes préférées, les propriétés des polymères, notamment leurs propriétés mécaniques, sont améliorées.
La masse molaire peut être déterminée par les méthodes classiques, comme par exemple par chromatographie d'exclusion stérique. Les masses molaires des polymères peuvent être estimées par chromatographie d'exclusion stérique équipé d'un détecteur réfractométrique. Le polymère est dissous dans un solvant approprié, par exemple le 1,1,1,3,3,3-hexafluoro-2-propanol. Les échantillons peuvent avoir une concentration de 1g/L. Ils peuvent être élués à un débit de 0,75mL/min. Les masses molaires moyennes (Mn et Mw) sont déterminées en utilisant une calibration avec des étalons de polyméthacrylate de méthyle.

L'expression « au début » d'une étape signifie à un moment auquel les réactifs de l'étape n'ont pas commencé à réagir. L'expression « au cours » d'une étape signifie à un moment auquel la réaction entre les réactifs a déjà commencé, mais n'est pas encore terminée. Il s'agit d'un moment où une partie des réactifs ont déjà été transformés en produit, et/ou en composé intermédiaire.

Un objet de l'invention est un procédé de préparation de polymères comprenant les étapes 1 et 2 décrites ci-avant.
Un objet de l'invention est un procédé de préparation de polymères, comprenant :
- une étape d'estérification entre des monomères d'un diacide linéaire saturé, de préférence d'acide succinique, d'acide 2,5-furanedicarboxylique, et d'un diol linéaire saturé, de préférence de 1,4-butanediol, pour former des oligomères, et
- une étape de couplage par transestérification des oligomères formés à la première étape pour former un polymère.

### Catalyseur

Les systèmes catalytiques et catalyseurs utilisables pour chacune des étapes de la polymérisation du procédé de l'invention peuvent être ou comprendre n'importe quel catalyseur classiquement utilisé pour chacune des étapes de la polymérisation du PBS.

Un catalyseur utile à la première étape d'estérification peut être choisi en particulier parmi l'acide para-toluène sulfonique (APTS) et l'acide méthane sulfonique (AMS).

Les catalyseurs pouvant être utilisés lors de la seconde étape de trans-estérification sont par exemple ceux décrits aux paragraphes [0090] à [0094] du brevet EP 1882712 B1. A titre d'exemples, on peut citer les catalyseurs, organiques ou inorganiques, comprenant un élément chimique choisi parmi le titane, le germanium, l'antimoine, l'étain, le bismuth, l'hafnium, le magnésium, l'aluminium, le lithium ou un mélange de ces catalyseurs. Il peut s'agir par exemple d'oxyde de germanium, de tétra-n-butylate de zirconium ou de tétra-n-butylate de titane. La quantité de catalyseur utilisée peut être comprise entre 50 ppm et 1500 ppm en masse d'élément par rapport à la masse totale du polymère obtenu, de préférence entre 100 et 1200 ppm. Dans un mode de réalisation de l'invention, le catalyseur comprend du zirconium comme élément, de préférence il s'agit du tétra-n-butylate de zirconium. Préférentiellement, la quantité de catalyseur de zirconium est comprise entre 600 et 1200 ppm en masse d'élément par rapport à la masse totale du polymère obtenu. L'utilisation du zirconium permet notamment de limiter la coloration du composite obtenu.

### Acide succinique

L'acide succinique utilisé pour la mise en oeuvre d'un procédé de synthèse selon l'invention est de préférence issu d'agro-ressources, ou bio-sourcé, mais peut également être pétrosourcé. Par exemple, l'acide succinique peut être produit par fermentation en utilisant des matières premières non fossiles renouvelables, notamment selon l'enseignement de la demande WO 2011064151.
Dans le cas où le procédé utilise un ester de l'acide succinique, celui-ci est de même de préférence issu d'agro-ressources, ou bio-sourcé, mais peut également être pétrosourcé.

### 1,4-Butanediol

Le 1,4-butanediol utilisé pour la mise en oeuvre d'un procédé de synthèse selon l'invention est de préférence issu de l'hydrogénation de l'acide succinique bio-sourcé ou de procédés fermentaires en employant les micro-organismes adéquats. Il est également possible d'employer du 1,4-butanediol pétrosourcé.

### Acide 2,5-furanedicarboxylique

L'acide 2,5-furanedicarboxylique utilisé pour la mise en oeuvre d'un procédé de synthèse selon l'invention est de préférence issu d'agro-ressources, ou bio-sourcé, mais peut également être pétrosourcé.
Dans le cas où le procédé utilise un ester de l'acide 2,5-furanedicarboxylique, celui-ci est de même de préférence issu d'agro-ressources, ou bio-sourcé, mais peut également être pétrosourcé.

Contrairement à ce qui était attendu, la Demanderesse a trouvé que l'ajout de monomères d'acide 2,5-furanedicarboxylique aux monomères d'acide succinique et de 1,4-butanediol utilisés pour synthétiser le PBS permet d'augmenter nettement la vitesse de trans-estérification, tout en conservant une température de polymérisation constante (étape 2 du procédé). L'effet attendu pour l'ajout d'un comonomère aromatique dans la synthèse d'un polymère aliphatique serait plutôt un ralentissement de la cinétique de polymérisation.
La cinétique de la réaction de trans-estérification peut être par exemple évaluée par le suivi du couple de rotation de l'agitateur mécanique. En effet, la réaction de transestérification va conduire à une augmentation de la masse molaire du polymère. Cette dernière s'accompagne d'une augmentation de la viscosité, qui peut être suivie par la mesure du couple exercé sur l'arbre d'agitation mécanique dans le milieu réactionnel en fusion.

Le procédé selon l'invention présente par conséquent des avantages indéniables par rapport aux procédés de préparation de polymères aliphatiques-aromatiques de l'art antérieur, puisque la cinétique de trans-estérification est, de façon inattendue, accélérée par la présence du monomère aromatique.
Le procédé selon l'invention permet en outre d'obtenir des polymères de masse molaire plus importante que d'autres procédés de synthèse de polymères aliphatiques-aromatiques, notamment car la présence du monomère aromatique n'a pas l'effet attendu de rendre la réaction plus difficile à réaliser. Ainsi, la trans-estérification peut être menée sans problème jusqu'à obtenir des masses molaires importantes, si désiré.

### Propriétés mécaniques des polymères selon l'invention

Les utilisations visées pour les polymères selon l'invention comprennent principalement des utilisations pour lesquelles les propriétés mécaniques sont importantes. Parmi les utilisations visées pour les polymères selon l'invention, on peut par exemple citer la formation de films.

Les polymères selon l'invention, et les polymères obtenus par un procédé selon l'invention, ont des propriétés mécaniques intéressantes. Par exemple, les polymères selon l'invention présentent une élongation à la rupture élevée. En particulier, l'élongation à la rupture des polymères selon l'invention, en particulier des polymères de PBSF selon l'invention, est supérieure à celle du PBS. De plus, pour un nombre de motifs aromatiques identique, l'élongation à la rupture des polymères de PBSF selon l'invention est également augmentée par rapport à celle des autres polyesters aliphatiques-aromatiques, notamment le poly(butylène succinate-co-téréphtalate) (PBST) et le poly (butylène adipate-co-téréphtalate) (PBAT). De plus, le PBSF, le polyester selon l'invention est particulièrement intéressant car ses propriétés mécaniques à haute température sont meilleures que celle des autres polymères selon l'invention, et notamment meilleures que celles des poly(butylène sébacate-co-furanoate). Ceci est lié à une température de fusion plus élevée du PBSF, à quantité molaire identique de monomères aliphatiques et aromatiques, par rapport à celle des poly(butylène sébacate-co-furanoate)s. La température de fusion du polymère selon l'invention est préférentiellement supérieure à 80°C, tout préférentiellement supérieure à 90°C. La température de fusion peut être déterminée selon les conditions opératoires des exemples.
Un autre objet de la présente invention est un polymère, notamment un polymère de poly(butylène succinate-co-furanoate) PBSF, susceptible d'être obtenu par un procédé selon l'invention.
Un autre objet de la présente invention est un polymère, notamment un polymère de poly(butylène succinate-co-furanoate) PBSF, obtenu par un procédé selon l'invention.

Un autre objet de la présente invention est une composition polymérique comprenant au moins un polymère selon l'invention, en particulier obtenu par un procédé selon l'invention.

Par « composition polymérique », on comprend une composition comprenant un ou plusieurs polymères selon l'invention, de préférence synthétisés par un procédé selon l'invention, éventuellement en mélange avec d'autres composants, tels que par exemple des polymères ou des additifs classiquement utilisés dans le domaine de la plasturgie.

Dans un mode de réalisation, la composition polymérique selon l'invention ne comprend pas d'autres composants que le ou les polymères selon l'invention.
Dans un autre mode de réalisation, la composition polymérique selon l'invention comprend comme seuls polymères au moins un polymère selon l'invention, de préférence obtenu par un procédé selon l'invention.
De préférence, la composition polymérique selon l'invention est constituée d'au moins un polymère selon l'invention, de préférence obtenu par un procédé selon l'invention.

Les polymères ou les compositions polymériques selon l'invention peuvent servir à la fabrication de tout type d'objet. Ils peuvent être mis en forme de différentes façons, notamment par extrusion, par extrusion gonflage (gonflage) ou extrusion soufflage de gaine ou de corps creux, par injection, par filage textile ou par calandrage. La mise en forme par gonflage permet de générer des films de polymère thermoplastique de grande dimension.

Les polymères et les compositions polymériques selon l'invention sont particulièrement adaptés à la mise en forme par gonflage.

Un objet de l'invention est un procédé de gonflage d'un film d'un polymère ou d'une composition polymérique selon l'invention. Le procédé de gonflage comprend leur mise en forme par gonflage, aussi nommé « Film Blowing » en anglais.
Ce procédé, bien connu de l'homme du métier, est généralement réalisé en alimentant en continu la gaine formée par le polymère à l'état fondu à l'aide d'une extrudeuse ; on parle également d'extrusion gainage ou d'extrusion soufflage de gaine.
En effet, le polymère selon l'invention se transforme particulièrement bien à l'aide de ces techniques, contrairement aux polymères de la demande WO 2009/135921 A1.
Un autre objet de l'invention est un film de polymère ou de composition polymérique selon l'invention, et obtenu de préférence par le procédé de gonflage selon l'invention.

Le polymère ou la composition peut donc se présenter sous forme de film. Le film selon l'invention présente généralement une épaisseur comprise entre 5 et 1000 µm, de préférence entre 10 et 50 µm.

Les exemples qui suivent sont fournis à titre illustratif, et non limitatif, des modes de réalisation de la présente invention.

### DESCRIPTION DES FIGURES

### Figure 1 :

Formule chimique de l'acide 2,5-furanedicarboxylique.

### Figure 2 :

Variation du couple ΔC pendant la trans-estérification du poly(butylène succinate-co-butylène furanoate) contenant différentes quantités de monomère acide 2,5-furanedicarboxylique introduits dans le réacteur (ligne pointillée : PBS, carrés : 5 mol% BF, triangles : 10 mol% BF, points: 20 mol% BF et losanges : 60mol% BF). La température de trans-estérification est de 230°C, le rapport molaire de catalyseur zirconium au diacide (total acide succinique + acide 2,5-furanedicarboxylique) est de 1,8.10⁻³.

### Figure 3 :

Variation du couple ΔC pendant la trans-estérification du poly(butylène succinate-co-butylène téréphtalate) contenant différentes quantités de monomère acide téréphtalique introduits dans le réacteur (ligne pointillée : 10 mol% BT (catalyseur Zr), carrés : 5 mol% BT (catalyseur Zr), triangles : 10 mol% BT (catalyseur Ti), points : 20 mol% BT (catalyseur Ti)). Les conditions expérimentales de chacune des synthèses sont précisées dans l'exemple 3.

### Figure 4 :

Variation du couple ΔC pendant la trans-estérification du poly(butylène sebacate-co-butylène furanoate) contenant 20 mol% de monomère acide 2,5-furanedicarboxylique introduits dans le réacteur. La température de trans-estérification est de 230°C, le rapport molaire de catalyseur titane au diacide (total acide sébacique + acide 2,5-furanedicarboxylique) est de 2.1.10⁻³.

### Figure 5 :

Spectre RMN ¹H du poly(butylène succinate-co-butylène furanoate) obtenu selon l'exemple 2.3.

### EXEMPLES

Les propriétés des polymères ont été étudiées avec les techniques suivantes :
La quantité de fonctions carboxyliques terminales (acid value, AV) est déterminée par titrage potentiométrique. Le polymère est tout d'abord solubilisé dans du chloroforme, puis titré par une solution d'hydroxyde de sodium dans le méthanol. Le résultat est par la suite exprimé comme l'équivalent d'hydroxyde de potassium (en mg/g) nécessaire pour neutraliser la solution.
Les viscosités fondues (MFR, Melt Flow Rate) des différents polyesters sont examinées à l'aide d'un gradeur de type ats farr extrusion plastometer. Toutes les mesures ont été effectuées suivant la norme ASTM D 1238-82 à 190°C avec un poids de 2,16 kg.
D'autre part, la viscosité réduite en solution est évaluée à l'aide d'un viscosimètre capillaire Ubbelohde à 25°C dans un mélange équimassique de phénol et d'ortho-dichlorobenzène après dissolution du polymère à 130°C sous agitation. Pour ces mesures, la concentration de polymère introduite est de 0,5g/L.
Les masses molaires des polymères sont estimées par chromatographie d'exclusion stérique dans le 1,1,1,3,3,3-hexafluoro-2-propanol. Les échantillons de concentration 1g/L sont élués à un débit de 0,75mL/min, les signaux sont ensuite enregistrés un détecteur RI de type Agilent-RI-1100a). Enfin les masses molaires moyennes (Mn et Mw) sont déterminées en utilisant une calibration avec des étalons de polyméthacrylate de méthyle.
Les propriétés thermiques (la transition vitreuse, la température de cristallisation, la température de fusion et le taux de cristallinité) sont déterminées par calorimétrie différentielle à balayage à 10°C/min (DSC, Differential Scanning Calorimetry).
Les propriétés mécaniques des films obtenus par extrusion gonflage sont examinées en traction uniaxiale à la vitesse de 50mm/min. Les éprouvettes de type haltère utilisées ont les dimensions suivantes : une épaisseur d'environ 30 à 50 µm, une largeur de 4 mm et une longueur nominale de 10 mm.
L'analyse ¹H NMR des copolymères contenant de l'acide 2,5-furandicarboxylique sont réalisés sur un spectromètre Bruker 400 MHz équipé d'une sonde QNP. Pour être analysés, les échantillons de polymère ont été préalablement solubilisés dans du chloroforme deutéré.
La compostabilité de certains échantillons a été réalisée suivant la norme ISO 14855-1 :2005, simulant un processus de compostage aérobie intensif. Pour ces essais l'échantillon est mélangé à un inoculum constitué par un compost mature dans une proportion de 1 pour 6 (w/w). Pendant le processus, la température est maintenue à 58±1°C et l'humidité est régulée à 50%. Le pH, ainsi que l'aération en continu du milieu sont également contrôlés et maîtrisés. La quantité de CO₂ dégagée par réacteur est mesurée à l'aide d'un analyseur infrarouge. Le taux de biodégradation est ensuite calculé en comparant la quantité cumulée de CO₂ dégagée au taux de carbone organique initialement contenu dans l'échantillon.

### Exemple 1 : Procédé selon l'invention

Un polymère selon l'invention est synthétisé par une réaction de polycondensation en deux étapes dans un réacteur de 7,5L équipé avec un système de chauffage, un agitateur mécanique avec mesure du couple ΔC, une colonne de distillation, une ligne de vide et une entrée d'azote gaz. Le réacteur est chargé avec 16 mol d'un mélange d'acide succinique et d'acide 2,5-furanedicarboxylique dans les proportions désirées et 16,8 mol de 1,4-butanediol (excès de diol de 5 mol%). Le mélange réactionnel est chauffé à 225°C sous pression de 2 bars d'azote et agité à vitesse constante (150 tours/min). Un mélange d'eau et de tétrahydrofurane (THF) correspondant à la déshydratation du butanediol est distillé à partir du réacteur. Le rendement de la première étape d'estérification est évalué en fonction de la quantité d'eau collectée. Dans la seconde étape, la pression est réduite à 0,7 mbar pendant 120 min et la température est augmentée à 230°C. Le catalyseur Zr(OBu)₄ est ajouté lorsque la pression est aux environs de 20 mbar, en une proportion telle que le rapport molaire entre la somme des diacides et le catalyseur est de 1 ,8.10⁻³. Ces conditions de basse pression sont maintenues jusqu'à obtention du couple ΔC désiré (mesuré par l'agitateur). Enfin, un jonc de polymère est coulé par la vanne de fond du réacteur, refroidi dans un bac d'eau thermo-régulé et découpé sous forme de granulés d'environ 15 mg.

### Exemple 2: Préparations de polybutylène succinate et de poly(butylène succinate-co-furanoate)s selon l'invention et comparatif

### Exemple 2.1 (exemple comparatif) :

La synthèse du polymère est réalisée suivant le procédé décrit dans l'exemple 1, à partir de 1514,0 g de 1,4-butanediol et de 1889,0 g d'acide succinique. En fin d'esterification, 11,586 g de tétra-n-butylate de zirconium sont ajoutés comme catalyseur. L'étape de transestérification est effectuée à 0,7mbar et 230°C pendant 250 minutes.

La résine ainsi obtenue a une viscosité fondue de 35 g/10min (190°C, 2,160 kg), une viscosité réduite en solution de 201 mL/g et masse molaire en nombre de 59.000 g.mol⁻¹. L'acidité du polymère final est de 51 µeq.g⁻¹. La température de fusion du polymère est de 115°C, sa transition vitreuse de -30°C, sa température de cristallisation de 59°C et son taux de cristallinité de 31%.

### Exemple 2.2 (polymère selon l'invention):

La synthèse du polymère est réalisée suivant le procédé décrit dans l'exemple 1, à partir de 1514,0 g de 1,4-butanediol, 1795,0g d'acide succinique et 124,9 g d'acide 2,5-furane dicarboxylique. En fin d'estérification, 11,586 g de tétra-n-butylate de zirconium sont ajoutés comme catalyseur. L'étape de trans-estérification est effectuée à 0,7mbar et 230°C pendant 40 minutes.

La résine ainsi obtenue a une viscosité fondue de 43 g/10min (190°C, 2,160 kg), une viscosité réduite en solution de 191 mL/g et masse molaire en nombre de 58.200 g.mol⁻¹. L'acidité du polymère final est de 71 µeq.g⁻¹. La température de fusion du polymère est de 111°C, sa transition vitreuse de -31°C, sa température de cristallisation de 63°C et son taux de cristallinité de 27%. La quantité d'acide 2,5-furanique introduite dans le polymère, quantifiée par RMN, est de 2,7 mol% par rapport à la somme des diacides.

### Exemple 2.3 (polymère selon l'invention):

La synthèse du polymère est réalisée suivant le procédé décrit dans l'exemple 1, à partir de 1514,0 g de 1,4-butanediol, 1700,5 g d'acide succinique et 249,7 g d'acide 2,5-furane dicarboxylique. En fin d'estérification, 11,586 g de tétra-n-butylate de zirconium sont ajoutés comme catalyseur. L'étape de trans-estérification est effectuée à 0,7mbar et 230°C pendant 50 minutes.

La résine ainsi obtenue a une viscosité fondue de 48 g/10min (190°C, 2,160 kg), une viscosité réduite en solution de 179 mL/g et masse molaire en nombre de 59.200 g.mol⁻¹. L'acidité du polymère final est de 76 µeq.g⁻¹. La température de fusion du polymère est de 103°C, sa transition vitreuse de -24°C, sa température de cristallisation de 50°C et son taux de cristallinité de 24%. La quantité d'acide 2,5-furanique introduite dans le polymère, quantifiée par RMN, est de 8,1 mol% par rapport à la somme des diacides.

### Exemple 2.4 (polymère selon l'invention):

La synthèse du polymère est réalisée suivant le procédé décrit dans l'exemple 1, à partir de 1514,0 g de 1,4-butanediol, 1511,6 g d'acide succinique et 499,5 g d'acide 2,5-furane dicarboxylique. En fin d'estérification, 11,586 g de tétra-n-butylate de zirconium sont ajoutés comme catalyseur. L'étape de trans-estérification est effectuée à 0,7mbar et 230°C pendant 90 minutes.

La résine ainsi obtenue a une viscosité fondue de 42 g/10min (190°C, 2,160 kg), une viscosité réduite en solution de 167 mL/g et masse molaire en nombre de 61.700 g.mol⁻¹. L'acidité du polymère final est de 76 µeq.g⁻¹. La température de fusion du polymère est de 90°C, sa transition vitreuse de -17°C, et son taux de cristallinité de 14%. La quantité d'acide 2,5-furanique introduite dans le polymère, quantifiée par RMN, est de 15,0 mol% par rapport à la somme des diacides.

### Exemple 2.5 (exemple comparatif):

La synthèse du polymère est réalisée suivant le procédé décrit dans l'exemple 1, à partir de 1514,0 g de 1,4-butanediol, 755,8 g d'acide succinique et 1498,5 g d'acide 2,5-furane dicarboxylique. En fin d'estérification, 11,586 g de tétra-n-butylate de zirconium sont ajoutés comme catalyseur. L'étape de trans-estérification est effectuée à 0,7mbar et 230°C pendant 150 minutes.
La résine ainsi obtenue a une viscosité réduite en solution de 22 mL/g et masse molaire en nombre de 1 250 g.mol-¹. La température de fusion du polymère est de 54°C, sa transition vitreuse de -21°C, et son taux de cristallinité de 15%. La quantité d'acide 2,5-furanique introduite dans le polymère, quantifiée par RMN, est de 50,6 mol% par rapport à la somme des diacides.
Le polymère ainsi synthétisé n'a pas pu être mis en oeuvre par extrusion gonflage car ne dispose pas d'une tenue du fondu et d'une vitesse de cristallisation suffisante.

Les propriétés mécaniques et les quantités d'acide 2,5-furanedicarboxylique réellement introduites dans les chaines de polymère sont données dans le Tableau 1.
Les fractions molaires de la somme des motifs issus d'acide 2,5-furanedicarboxylique et de diacides aliphatique, rapportée à la somme totale des motifs, sont toutes comprises entre 40 et 60% et ne sont pas reprises dans le Tableau 1.
Les fractions molaires de la somme des motifs issus de diols aliphatique, rapportée à la somme totale des motifs, sont toutes comprises entre 40 et 60% et ne sont pas reprises dans le Tableau 1.

### Exemple 3 : Exemples comparatifs, préparation d'autres polymères aliphatiques-aromatiques

### Exemple 3.1

La synthèse du polymère est réalisée suivant le procédé décrit dans l'exemple 1, à partir de 1514,0 g de 1,4-butanediol, 1700,5 g d'acide succinique et 265,8 g d'acide téréphtalique. En fin d'estérification, 11,586 g de tétra-n-butylate de zirconium sont ajoutés comme catalyseur. L'étape de trans-estérification est effectuée à 0,7mbar et 230°C pendant 100 minutes.
La résine ainsi obtenue a une viscosité réduite en solution de 29 mL/g. La température de fusion du polymère est de 106°C, sa transition vitreuse de - 42°C, sa température de cristallisation de 59°C et son taux de cristallinité de 37%.

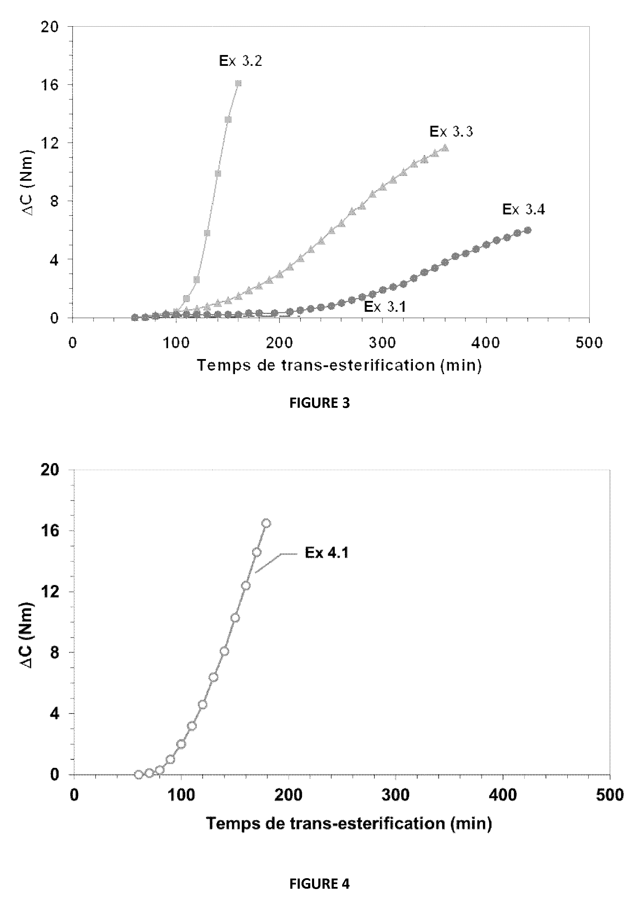

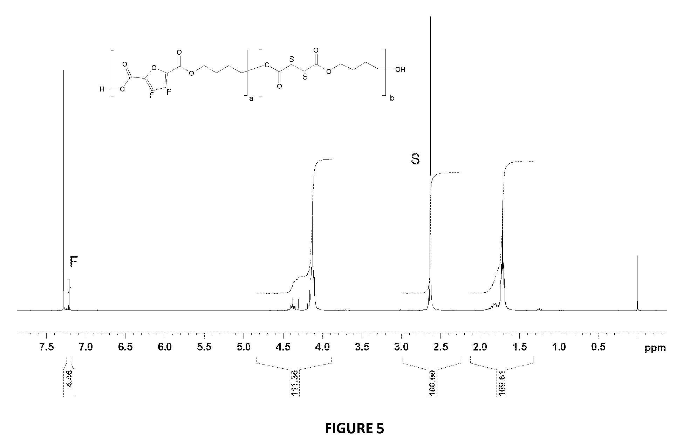

Le polymère ainsi formé comparativement aux différents PBSF synthétisés dans les mêmes conditions (température de trans-estérification et catalyseur), a une viscosité réduite très faible, synonyme d'une masse molaire également faible. L'exemple 3.1 de la Figure 3 confirme bien ce phénomène. Le polymère ainsi synthétisé n'a pas pu être mis en oeuvre par extrusion gonflage car ne dispose pas d'une tenue du fondu et d'une vitesse de cristallisation suffisante.

On a donc modifié dans l'exemple 3.2 qui suit les conditions de synthèse pour pouvoir former un polymère présentant une masse molaire plus élevée (augmentation de la température).

### Exemple 3.2

La synthèse du polymère est réalisée suivant le procédé décrit dans l'exemple 1, à partir de 1514,0 g de 1,4-butanediol, 1795 g d'acide succinique et 132,9 g d'acide téréphtalique. En fin d'estérification, 11,586 g de tétra-n-butylate de zirconium sont ajoutés comme catalyseur. L'étape de trans-estérification est effectuée à 0,7mbar et 250°C pendant 36 minutes.
La résine ainsi obtenue a une viscosité fondue de 37 g/10min (190°C, 2,160 kg), une viscosité réduite en solution de 200 mL/g et masse molaire en nombre de 52 400 g.mol⁻¹. L'acidité du polymère final est de 70 µeq.g⁻¹. La température de fusion du polymère est de 110°C, sa transition vitreuse de -31°C, sa température de cristallisation de 50°C et son taux de cristallinité de 29%.
La quantité d'acide téréphtalique introduite dans le polymère, quantifiée par RMN, est de 4,1 mol% par rapport à la somme des diacides.

### Exemple 3.3

Pour former le polymère, on a également effectué un changement de catalyseur selon le procédé suivant :
La synthèse du polymère est réalisée suivant le procédé décrit dans l'exemple 1, à partir de 1514,0 g de 1,4-butanediol, 1700,5 g d'acide succinique et 265,8 g d'acide téréphtalique. En fin d'estérification, 7,831 g de tétra-n-butylate de titane sont ajoutés comme catalyseur. L'étape de trans-estérification est effectuée à 0,7mbar et 250°C pendant 240 minutes.
La résine ainsi obtenue a une viscosité fondue de 40 g/10min (190°C, 2,160 kg), une viscosité réduite en solution de 174 mL/g et masse molaire en nombre de 49.700 g.mol⁻¹. L'acidité du polymère final est de 45 µeq.g⁻¹. La température de fusion du polymère est de 105°C, sa transition vitreuse de -28°C, sa température de cristallisation de 34°C et son taux de cristallinité de 25%.
La quantité d'acide téréphtalique introduite dans le polymère, quantifiée par RMN, est de 7,5 mol% par rapport à la somme des diacides.

### Exemple 3.4

Pour former le polymère, on a encore augmenté la température de polymérisation et la quantité de catalyseur selon le procédé qui suit :
La synthèse du polymère est réalisée suivant le procédé décrit dans l'exemple 1, à partir de 1514,0 g de 1,4-butanediol, 1511,6 g d'acide succinique et 531,6 g d'acide téréphtalique. En fin d'estérification, 15,661 g de tétra-n-butylate de titane sont ajoutés comme catalyseur. L'étape de trans-estérification est effectuée à 0,7mbar et 270°C pendant 320 minutes.
La résine ainsi obtenue a une viscosité fondue de 55 g/10min (190°C, 2,160 kg), une viscosité réduite en solution de 132 mL/g et masse molaire en nombre de 34.900 g.mol⁻¹. L'acidité du polymère final est de 58 µeq.g⁻¹. La température de fusion du polymère est de 97°C, sa transition vitreuse de -27°C, sa température de cristallisation de 20°C et son taux de cristallinité de 21%.
La quantité d'acide téréphtalique introduite dans le polymère, quantifiée par RMN, est de 13,9 mol% par rapport à la somme des diacides.

### Exemple 4 : Préparations de poly(butylène sébacate-co-furanoate)s

### Exemple 4.1 (polymère selon l'invention):

La synthèse du polymère est réalisée suivant le procédé décrit dans l'exemple 1, à partir de 1514,0 g de 1,4-butanediol, 2588,2 g d'acide sébacique et 499,5 g d'acide 2,5-furane dicarboxylique. En fin d'estérification, 11,237 g de tétra-n-butylate de titane sont ajoutés comme catalyseur. L'étape de trans-estérification est effectuée à 0,7mbar et 230°C pendant 59 minutes.

La résine ainsi obtenue a une viscosité réduite en solution de 183 mL/g et masse molaire en nombre de 51 500 g.mol⁻¹. La température de fusion du polymère est de 57°C, sa transition vitreuse de -42°C, et son taux de cristallinité de 33%. La quantité d'acide 2,5-furanique introduite dans le polymère, quantifiée par RMN, est de 18,8 mol% par rapport à la somme des diacides.

Le polymère final a pu être mis en forme par extrusion gonflage. Cependant, le copolymère final présente une température de fusion faible (Tf=57°C), le rendant inutilisable pour certaines applications. Sa tenue thermique est plus faible que celle des copolymères à base d'acide succinique.

### Exemple 4.2_(Exemple comparatif):

La synthèse de ce polymère est réalisée suivant le procédé décrit dans l'exemple 1 de la demande de brevet WO2009135921 A1, à partir de 2019,3 g de 1,4-butanediol, 1294,1 g d'acide sébacique et 1766,4g de dimethyl furane dicarboxylate. Le mélange est chauffé à 200°C sous agitation constante. Cette température est maintenue pendant une heure, puis 100ppm de tetra-orthobutyl de titane (Tyzor) sont ajoutés. Suite à cet ajout, la température est augmentée jusqu'à 235°C en 3 heures. Durant cette étape d'esterification un mélange de méthanol, d'eau et de tétrahydrofurane est récupéré.
En fin d'estérification, 1000ppm de tetra-orthobutyl de titane (Tyzor) sont à nouveau ajoutés, puis la pression est réduite à 1mbar. La température est ensuite augmentée à 240°C. Ces conditions de vide et de température seront maintenues pendant 120 minutes.
La résine ainsi obtenue a une viscosité réduite en solution de 159 mL/g et masse molaire en nombre de 59 090 g.mol⁻¹. La température de fusion du polymère est de 101°C, sa transition vitreuse de -12°C, et son taux de cristallinité de 9%. La quantité d'acide 2,5-furanique introduite dans le polymère, quantifiée par RMN, est de 58,0 mol% par rapport à la somme des diacides.
Le polymère ainsi synthétisé ne dispose pas d'une vitesse de cristallisation suffisante pour être mis en forme par extrusion gonflage.

Le tableau 1 ci-dessous regroupe les valeurs de module, de contrainte et d'allongement à la rupture dans deux directions (longitudinale et transversale par rapport à l'axe de la gaine formée) pour différents films de polymères. Les polymères P(BS-co-BF) sont selon l'invention. Les fractions molaires de la somme des motifs issus d'acide 2,5-furanedicarboxylique et de diacides aliphatique, rapportée à la somme totale des motifs, sont toutes comprises entre 40 et 60% et ne sont pas reprises dans le Tableau 1.
Les fractions molaires de la somme des motifs issus de diols aliphatique, rapportée à la somme totale des motifs, sont toutes comprises comprise entre 40 et 60% et ne sont pas reprises dans le Tableau 1.

**Tableau 1**

| Copolymère | Ex. | Comonomère dans polymère (mol%) | Comonomère réacteur (mol%) | Module (MPa) | | Contrainte à la rupture (MPa) | | Allongement à la rupture (%) | |
|---|---|---|---|---|---|---|---|---|---|
| | | | | Long. | Trans. | Long. | Trans. | Long. | Trans. |
| PBS [comparatif] | Ex 2.1 | 0 | | 148 | 145 | 19 | 17 | 232 | 170 |
| P(BS-*co*-BT) [comparatif] | Ex 3.1 | | 10 | Non soufflable | | | | | |
| | Ex 3.2 | 4,1 | 5 | 97 | 100 | 30 | 25 | 1111 | 1026 |
| | Ex 3.3 | 7,5 | 10 | 94 | 83 | 28 | 17 | 1096 | 875 |
| | Ex 3.4 | 13,9 | 20 | 62 | 87 | 15 | 21 | 696 | 799 |
| P(BS-*co*-BF) [invention] | Ex 2.2 | 2,7 | 5 | 84 | 172 | 23 | 14 | 952 | 174 |
| | Ex 2.3 | 8,1 | 10 | 75 | 77 | 18 | 20 | 1125 | 1027 |
| | Ex 2.4 | 15,0 | 20 | 76 | 115 | 23 | 21 | 1400 | 1423 |
| P(BS-*co*-BF) [comparatif] | Ex 2.5 | 50,6 | 60 | Non soufflable | | | | | |
| P(BSeb-co-BF) [invention] | Ex 4.1 | 18,8 | 20 | 49 | 61 | 17 | 19 | 1793 | 2240 |
| P(BSeb-co-BF) [comparatif] | Ex 4.2 | 58,0 | 60 | Non soufflable | | | | | |
| P(BA-*co*-BT)^{a} [comparatif] | - | 49,0 | - | 20 | 11 | 20 | 19 | 1192 | 2108 |

| | | | | | | | | | |
|---|---|---|---|---|---|---|---|---|---|
| ^{a} : produit commercialisé par BASF SE (Allemagne) grade F Blend C1200 | | | | | | | | | |

Comparaison de la compostabilité des différents polyesters aliphatiques-aromatiques Le tableau 2 (ci-dessous) donne les temps de dégradation à 90% de certains échantillons dans des conditions de compost. Il montre bien que les échantillons de poly(butylène succinate-co-furanoate) répondent à la norme EN 13432 en terme de biodégradabilité.

**Tableau 2**

| Copolymère | Ex. | t (jours) à 90% de dégradation de l'échantillon | Compostabilité selon la norme EN 13432 |
|---|---|---|---|
| Cellulose [reference) | | 49 | Oui |
| P(BS-co-BF) [invention] | Ex 2.2 | 103 | Oui |
| | Ex 2.3 | 83 | Oui |
| | Ex 2.4 | 66 | Oui |
| P(BA-*co*-BT)^{a} [comparatif] | - | 130 | Oui |

### Comparaison de la cinétique d'un procédé selon l'invention avec un procédé de synthèse de PBS

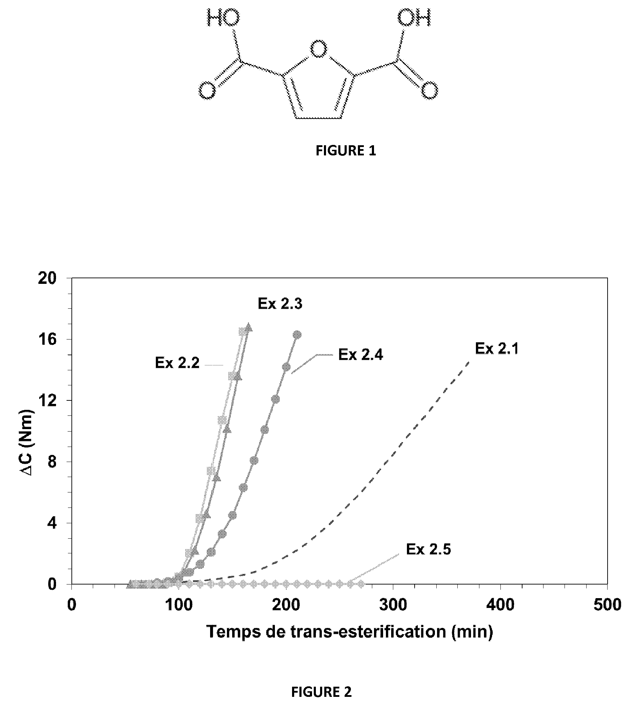

La Figure 2 présente la mesure du couple dans un procédé selon l'invention pour différentes proportions de comonomère acide 2,5-furanedicarboxylique (5, 10 et 20%) en fonction de la durée de trans-estérification, comparé au couple mesuré pour un procédé de synthèse de PBS en absence de comonomère. Le catalyseur Zr(OBu)₄ est en proportion telle que le rapport molaire entre la somme des diacides et le catalyseur est de 1,8.10⁻³, et la température de trans-estérification est de 230°C.

Le couple augmente plus rapidement pour les polymères comprenant du comonomère acide 2,5-furanedicarboxylique que pour le PBS seul. Ainsi, par exemple, un couple de 12 Nm est obtenu au bout de :
- 140 minutes environ pour 5% de comonomère acide 2,5-furanedicarboxylique,
- 150 minutes environ pour 10% de comonomère acide 2,5-furanedicarboxylique,
- 190 minutes environ pour 20% de comonomère acide 2,5-furanedicarboxylique,
- et 340 minutes environ pour 0% de comonomère acide 2,5-furanedicarboxylique.

Cette augmentation est caractéristique d'une accélération de la cinétique de transestérification lors de l'ajout du comonomère acide 2,5-furanedicarboxylique.

L'accélération de la cinétique de polymérisation ne se fait pas au détriment de la qualité de la polymérisation, puisque l'indice de polydispersité obtenu est de 1,9 pour le PBS seul, 1,8 pour les PBS comprenant 5 et 10% de comonomère acide 2,5-furanedicarboxylique, et 1,9 pour le PBS comprenant 20% de comonomère acide 2,5-furanedicarboxylique. De même, les masses molaires obtenues sont :
- 59 000 g/mol pour le PBS,
- 58 200 g/mol pour le PBS comprenant 5% de comonomère acide 2,5-furanedicarboxylique,
- 59 200 g/mol pour le PBS comprenant 10% de comonomère acide 2,5-furanedicarboxylique, et
- 61700 g/mol pour le PBS comprenant 20% de comonomère acide 2,5-furanedicarboxylique.

A titre de comparaison, la Figure 3 présente la mesure du couple dans un procédé de synthèse de PBS pour différentes proportions de comonomère acide téréphtalique (5, 10 et 20%), dans différentes conditions de synthèse (quantité et type de catalyseur et température) en fonction de la durée de trans-estérification. Les conditions utilisées pour chacune des proportions ont dû être optimisées pour que la polymérisation se fasse. Ces conditions sont les suivantes :
5% :
   - catalyseur Zr(OBu)₄,
   - rapport molaire entre la somme des diacides et le catalyseur 1,8.10⁻³, et
   - température de trans-estérification 250°C.
10% :
   - catalyseur Ti(OBu)₄,
   - rapport molaire entre la somme des diacides et le catalyseur 1,4.10⁻³, et
   - température de trans-estérification 250°C.
20%:
   - catalyseur Ti(OBu)₄,
   - rapport molaire entre la somme des diacides et le catalyseur 2,9.10⁻³, et
   - température de trans-estérification 270°C.

Dans ce cas, l'ajout du comonomère ralentit la cinétique de l'estérification. En outre, l'indice de polydispersité passe de 1,9 pour 5% de comonomère à 2,1 et 3,8 pour respectivement 10 et 20% de comonomère. De même, la masse molaire des polymères obtenus passe de 52 400 g/mol pour 5% de comonomère à 49 700 et 34 900 g/mol pour respectivement 10 et 20% de comonomère.

## Revendications

1. Polymère comprenant des motifs issus de monomères comprenant un acide 2,5-furanedicarboxylique, au moins un diacide aliphatique comprenant de 4 à 10 atomes de carbone et au moins un diol aliphatique comprenant de 2 à 8 atomes de carbone, dans lequel ledit polymère comprend :
- une fraction molaire de motifs issus d'acide 2,5-furanedicarboxylique, rapportée à la somme des moles de motifs issus de diacides aliphatiques et d'acide 2,5-furanedicarboxylique, allant de 2,5 à 35%;
- la fraction molaire de la somme des motifs issus d'acide 2,5-furanedicarboxylique et de diacides aliphatique, rapportée à la somme totale des motifs, étant comprise entre 40 et 60%; et
- la fraction molaire de la somme des motifs issus de diols aliphatique, rapportée à la somme totale des motifs, étant comprise entre 40 et 60%.

2. Polymère selon la revendication 1, dans lequel le diacide aliphatique est un diacide saturé linéaire et/ou le diol aliphatique est un diol saturé linéaire.

3. Polymère selon la revendication 2, dans lequel le diacide aliphatique est l'acide succinique.

4. Polymère selon la revendication 2 ou 3, dans lequel le diol aliphatique est le 1,4-butanediol.

5. Polymère selon l'une quelconque des revendications précédentes, dans lequel la fraction molaire de motifs issus d'acide 2,5-furanedicarboxylique, rapportée à la somme des moles de motifs issus de diacides aliphatiques et d'acide 2,5-furanedicarboxylique, va de 5 à 30%, avantageusement de 6 à 25%, préférentiellement de 7 à 20%.

6. Polymère selon l'une quelconque des revendications précédentes, dans lequel la somme des motifs issus d'acide 2,5-furanedicarboxylique, de diacides aliphatiques et de diols aliphatiques est supérieure à 90% en moles de la totalité des motifs du polymère, préférentiellement supérieure à 95%, tout préférentiellement est égale à 100%.

7. Procédé de préparation de polymères définis selon l'une des revendications 1-6, comprenant :
- une étape 1 d'estérification entre des monomères d'un diacide aliphatique, d'acide 2,5-furanedicarboxylique, et d'un diol aliphatique, pour former des oligomères, et
- une étape 2 de couplage par transestérification des oligomères formés à la première étape pour former un polymère.

8. Procédé selon la revendication 7, dans lequel le diacide aliphatique est un diacide aliphatique saturé linéaire et/ou le diol aliphatique est un diol aliphatique saturé linéaire.

9. Procédé selon la revendication 8, dans lequel le diacide saturé linéaire est l'acide succinique.

10. Procédé selon la revendication 8 ou 9, dans lequel le diol saturé linéaire est le 1,4-butanediol.

11. Procédé selon l'une quelconque des revendications 7 à 10, dans lequel l'acide 2,5-furanedicarboxylique, le diacide aliphatique et/ou le diol aliphatique est (sont) issu(s) d'agro-ressources, ou bio-sourcés.

12. Procédé selon l'une quelconque des revendications 7 à 11, dans lequel l'étape 2 est réalisée en présence d'un catalyseur de zirconium.

13. Polymère obtenu par un procédé selon l'une quelconque des revendications 7 à 12.

14. Composition polymérique comprenant au moins un polymère selon l'une quelconque des revendications 1 à 6 et 13.

15. Film comprenant un polymère selon l'une des revendications 1 à 6 ou 13 ou une composition polymérique selon la revendication 14.

## Patentansprüche

1. Polymer, umfassend Struktureinheiten, die von Monomeren abgeleitet sind, umfassend eine 2,5-Furandicarbonsäure, wenigstens eine aliphatische Dicarbonsäure mit 4 bis 10 Kohlenstoffatomen und wenigstens ein aliphatisches Diol mit 2 bis 8 Kohlenstoffatomen, wobei besagtes Polymer umfasst:
- eine Molfraktion von Struktureinheiten, die von 2,5-Furandicarbonsäure abgeleitet sind, bezogen auf die Molsumme von Struktureinheiten, die von aliphatischen Dicarbonsäuren und von 2,5-Furandicarbonsäure abgeleitet sind, im Bereich von 2,5 bis 35%,
- wobei die Molfraktion der Summe der Struktureinheiten, die von 2,5-Furandicarbonsäure und von aliphatischen Dicarbonsäuren abgeleitet sind, bezogen auf die Gesamtsumme der Struktureinheiten zwischen 40 und 60% beträgt; und
- wobei die Molfraktion der Summe der Struktureinheiten, die von aliphatischen Diolen abgeleitet sind, bezogen auf die Gesamtsumme der Struktureinheiten zwischen 40 und 60% beträgt.

2. Polymer gemäß Anspruch 1, wobei die aliphatische Dicarbonsäure eine lineare gesättigte Dicarbonsäure ist und/oder das aliphatische Diol ein lineares gesättigtes Diol ist.

3. Polymer gemäß Anspruch 2, wobei die aliphatische Dicarbonsäure Bernsteinsäure ist.

4. Polymer gemäß Anspruch 2 oder 3, wobei das aliphatische Diol 1,4-Butandiol ist.

5. Polymer gemäß einem der vorhergehenden Ansprüche, wobei die Molfraktion von Struktureinheiten, die von 2,5-Furandicarbonsäure abgeleitet sind, bezogen auf die Molsumme von Struktureinheiten, die von aliphatischen Dicarbonsäuren und von 2,5-Furandicarbonsäure abgeleitet sind, von 5 bis 30%, vorteilhafterweise von 6 bis 25%, bevorzugt von 7 bis 20% reicht.

6. Polymer gemäß einem der vorhergehenden Ansprüche, wobei die Summe der Struktureinheiten, die von 2,5-Furandicarbonsäure, von aliphatischen Dicarbonsäuren und von aliphatischen Diolen abgeleitet sind, mehr als 90 Mol-% der gesamten Struktureinheiten des Polymers, bevorzugt mehr als 95% und ganz bevorzugt 100% beträgt.

7. Verfahren zur Herstellung von Polymeren, die gemäß einem der Ansprüche 1 bis 6 definiert sind, umfassend:
- einen Schritt 1 der Veresterung von Monomeren von einer aliphatischen Dicarbonsäure, von 2,5-Furandicarbonsäure und von einem aliphatischen Diol, um Oligomere zu bilden, und
- einen Schritt 2 der Kopplung mittels Transveresterung der Oligomere, die im ersten Schritt gebildet werden, um ein Polymer zu bilden.

8. Verfahren gemäß Anspruch 7, wobei die aliphatische Dicarbonsäure eine lineare gesättigte aliphatische Dicarbonsäure ist und/oder das aliphatische Diol ein lineares gesättigtes aliphatisches Diol ist.

9. Verfahren gemäß Anspruch 8, wobei die lineare gesättigte Dicarbonsäure Bernsteinsäure ist.

10. Verfahren gemäß Anspruch 8 oder 9, wobei das lineare gesättigte Diol 1,4-Butandiol ist.

11. Verfahren gemäß einem der Ansprüche 7 bis 10, wobei die 2,5-Furandicarbonsäure, die aliphatische Dicarbonsäure und/oder das aliphatische Diol aus landwirtschaftlichen Ressourcen stammen oder biologischer Herkunft sind.

12. Verfahren gemäß einem der Ansprüche 7 bis 11, wobei Schritt 2 in Gegenwart eines Zirkonium-Katalysators durchgeführt wird.

13. Polymer, das mit einem Verfahren gemäß einer der Ansprüche 7 bis 12 erhalten wird.

14. Polymere Zusammensetzung, umfassend wenigstens ein Polymer gemäß einem der Ansprüche 1 bis 6 und 13.

15. Film, umfassend ein Polymer gemäß einem der Ansprüche 1 bis 6 oder 13 oder eine polymere Zusammensetzung gemäß Anspruch 14.

## Claims

1. A polymer comprising units derived from monomers comprising a 2,5-furandicarboxylic acid, at least one aliphatic diacid comprising 4 to 10 carbon atoms and at least one aliphatic diol comprising 2 to 8 carbon atoms, in which said polymer comprises:
- a mole fraction of units derived from 2,5-furandicarboxylic acid, relative to the sum of the moles of units derived from aliphatic diacids and from 2,5-furandicarboxylic acid, in the range from 2.5 to 35%;
- the mole fraction of the sum of the units derived from 2,5-furandicarboxylic acid and from aliphatic diacids, relative to the total of the units, being between 40 and 60%; and
- the mole fraction of the sum of the units derived from aliphatic diols, relative to the total of the units, being between 40 and 60%.

2. The polymer according to claim 1, wherein the aliphatic diacid is a linear saturated diacid and/or the aliphatic diol is a linear saturated diol.

3. The polymer according to claim 2, wherein the aliphatic diacid is succinic acid.

4. The polymer according to claim 2 or 3, wherein the aliphatic diol is 1,4-butanediol.

5. The polymer according to any one of the preceding claims, wherein the mole fraction of units derived from 2,5-furandicarboxylic acid, relative to the sum of the moles of units derived from aliphatic diacids and from 2,5-furandicarboxylic acid, ranges from 5 to 30%, advantageously from 6 to 25%, preferably from 7 to 20%.

6. The polymer according to any one of the preceding claims, wherein the sum of the units derived from 2,5-furandicarboxylic acid, from aliphatic diacids and from aliphatic diols is above 90 mol% of the total units of the polymer, preferably above 95 mol% and most preferably equal to 100 mol%.

7. A process for preparing polymers as defined in any one of claims 1 to 6, comprising:
- a step 1 of esterification between monomers of an aliphatic diacid, of 2,5-furandicarboxylic acid, and of an aliphatic diol, to form oligomers, and
- a step 2 of coupling, by transesterification, of the oligomers formed in the first step to form a polymer.

8. The process according to claim 7, wherein the aliphatic diacid is a linear saturated aliphatic diacid and/or the aliphatic diol is a linear saturated aliphatic diol.

9. The process according to claim 8, wherein the linear saturated diacid is succinic acid.

10. The process according to claim 8 or 9, wherein the linear saturated diol is 1,4-butanediol.

11. The process according to any one of claims 7 to 10, wherein the 2,5-furandicarboxylic acid, the aliphatic diacid and/or the aliphatic diol is (are) derived from agricultural resources, or biosourced.

12. The process according to any one of claims 7 to 11, wherein step 2 is carried out in the presence of a zirconium catalyst.

13. A polymer produced by a process according to any one of claims 7 to 12.

14. A polymer composition comprising at least one polymer according to any one of claims 1 to 6 and 13.

15. A film comprising a polymer according to any one of claims 1 to 6 or 13 or a polymer composition according to claim 14.
